# EUROPEAN PATENT APPLICATION

(11) **EP 2 579 146 A2**
(43) Date of publication of application: **10.04.2013**
(21) Application number: 12187235.2
(22) Date of filing: 04.10.2012
(51) Int. Cl.: G06F 3/0488

(54) **Touch display apparatus**

(30) Priority: 07.10.2011 TW 100136546
(71) Applicant: Young Optics Inc., Hsinchu 30076 (TW)
(72) Inventor: Chung, Po-Jen, 30076 Hsinchu (TW); Lin, Wei-Szu, 30076 Hsinchu (TW); Tsai, Chih-Hsien, 30076 Hsinchu (TW); Li, Kang-Hsi, 30076 Hsinchu (TW); Chou, Hung-Chih, 30076 Hsinchu (TW); Huang, Chien-Jung, 30076 Hsinchu (TW)
(74) Representative: TER MEER - STEINMEISTER & PARTNER GbR

(57) **Abstract**

A touch display apparatus including a first projecting screen and a projection apparatus is provided. The first projecting screen has a first curved surface. The first curved surface is capable of receiving a touch input instruction and has at least one tactile sense identify region. A sense of touch of the tactile sense identify region is different from a sense of touch of the other regions of the first curved surface. The projection apparatus is capable of projecting a projecting beam toward the first curved surface so as to form an image.

## Description

### CROSS-REFERENCE TO RELATED APPLICATION

This application claims the priority benefit of Taiwan application serial no. 100136546, filed on October 7, 2011. The entirety of the above-mentioned patent application is hereby incorporated by reference herein and made a part of this specification.

### BACKGROUND OF THE INVENTION

### 1. Field of the Invention

The invention generally relates to a display apparatus, and more particularly to a touch display apparatus.

### 2. Description of Related Art

With the development of science and technology, more and more advanced video, navigator, telephone, and other functions are built in a central console of a vehicle by a vehicle manufacturer. However, if many physical press buttons or knobs are arranged on the central console with limited space to control the functions above, the central console becomes quite congested. Therefore, a touch screen is introduced by many vehicle manufacturers to control the complicated functions, so that the design of the central console becomes simpler.

At present, the most common touch screen for vehicle is a thin-film transistor (TFT) liquid crystal display (LCD). In view of the requirement for evaporation uniform in the manufacturing process of the TFT LCD, a glass material needs to have a high flatness, which limits the shape plasticity of the touch screen. Although an organic light emitting diode (OLED) display has flexibility, disadvantages such as inadequate mass production technology and short service life exist, and the OLED display cannot be universally applied to a touch screen for vehicle. In addition, when a driver operates the touch screen, the driver cannot pay regard to the road condition due to the transfer of the line of sight to the touch screen, causing driving risk and inconvenient operation of the touch screen.

Taiwan Utility Model Patent No. M376079 discloses a screen protection film, which may be attached to a touch screen of an electronic apparatus, and has thereon convexes body corresponding to touch regions on a surface of the touch screen, so that a user may perform touch input via the touch regions by identifying the positions of the convexes with the aid of tactile sense. Taiwan Patent Publication No. 200506694 discloses a touch apparatus, in which touch positions are sensed by a force sensor.

### SUMMARY OF THE INVENTION

The invention is directed to a touch display apparatus, which could alleviate the limitation on shape design and be operated conveniently.

Other objectives and advantages of the invention could be further understood from the technical features disclosed herein.

In order to achieve one, a part or all of the objectives, or other objectives of the invention, an embodiment of the invention provides a touch display apparatus, which includes a first projecting screen and a projection apparatus. The first projecting screen has a first curved surface. The first curved surface is capable of receiving a touch input instruction and has at least one tactile sense identify region. A sense of touch of the tactile sense identify region is different from a sense of touch of the other regions of the first curved surface. The projection apparatus is capable of projecting a projecting beam toward the first curved surface, so as to form an image.

In an embodiment of the invention, the tactile sense identify region may include a bump, a recess, or a rough surface, and a material of the tactile sense identify region is an elastic material. A material of the tactile sense identify region of the first projecting screen is the same as or different from a material of other regions of the first curved surface of the first projecting screen, and the tactile sense identify region is located at a geometric center of the first projecting screen. The image includes multiple click selection blocks, and the click selection blocks surround the tactile sense identify region. The quantity of the tactile sense identify regions is multiple, the image includes multiple click selection blocks, and the tactile sense identify regions are respectively aligned with the click selection blocks. The first projecting screen receives the touch input instruction by an infrared (IR) touch technology, a material of the first projecting screen is a scattering material, and the projecting beam forms the image on the first curved surface.

Another embodiment of the invention provides a touch display apparatus, which includes a first projecting screen, having a first curved surface, in which the first curved surface is capable of receiving a touch input instruction and has at least one tactile sense identify region, and a sense of touch of the tactile sense identify region is different from a sense of touch of the other regions of the first curved surface; a second projecting screen, having a second curved surface, in which the first projecting screen covers the second projecting screen; and a driving device, electrically connected to the first projecting screen and capable of driving the first projecting screen to move relative to the second projecting screen, so as to expose the second curved surface. Another embodiment of the invention further includes a projection apparatus, capable of projecting a projecting beam toward the second curved surface to form an image, when the first projecting screen moves and does not cover the second projecting screen. A material of the first projecting screen is a transparent material, and a material of the second projecting screen is a scattering material, so that the projecting beam projected on the second curved surface forms the image.

Based on the above, in the embodiment of the invention, the image is generated by performing projection to a projecting screen by a projection apparatus, and thus the touch function of the projecting screen could be achieved by an IR touch technology or other suitable technologies, without limiting the shape of the projecting screen, so that a displaying surface of the projecting screen may be designed to be a curved surface, so as to meet the requirements of various appearance designs. In addition, the tactile sense identify region on the projecting screen has a sense of touch different from that of the other regions, so that a user could identify the position of the tactile sense identify region with the aid of tactile sense, thereby improving the operation convenience of the touch display apparatus. Furthermore, when the user needs to use an entertainment mode (for example, watching a film), if the image is projected onto the first projecting screen, the tactile sense identify region on the first projecting screen will affect the watch quality; in this case, the screen mode is switched by using the driving device, when the user needs to use the entertainment mode, the first projecting screen having the tactile sense identify region may be mechanically ascended or descended, so that the second projecting screen is not blocked off, the projection apparatus projects the image beam to the second projecting screen, and the user could watch the sharp image.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a side view of a touch display apparatus according to an embodiment of the invention.

FIG. 2 is a front view of a first projecting screen shown in FIG. 1.

FIG. 3 is a cross-sectional view of a first projecting screen according to another embodiment of the invention.

FIG. 4 is a cross-sectional view of a first projecting screen according to another embodiment of the invention.

FIG. 5 is a front view of a first projecting screen according to another embodiment of the invention.

FIG. 6 is a schematic view of a touch display apparatus according to another embodiment of the invention.

FIG. 7 is a block diagram of a driving device electrically connected to the first projecting screen shown in FIG. 6.

FIG. 8 is a schematic view of the driven first projecting screen shown in FIG. 6.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

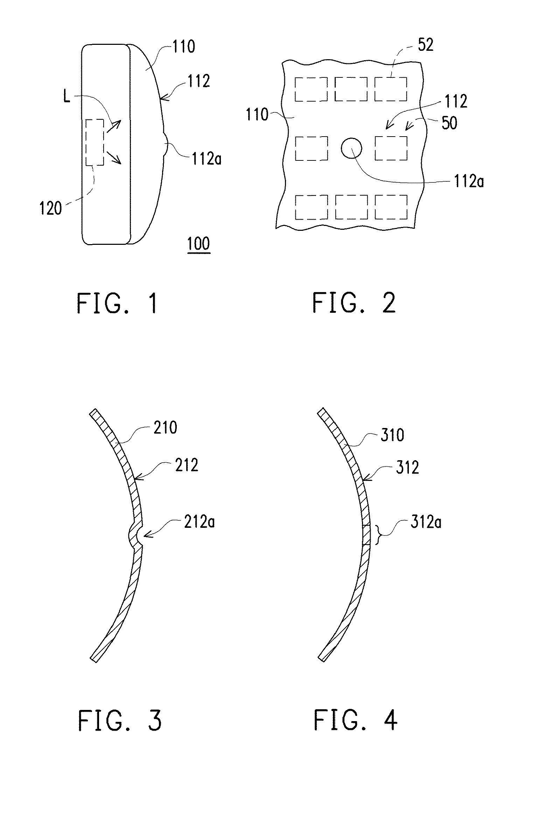

FIG. 1 is a side view of a touch display apparatus according to an embodiment of the invention. FIG. 2 is a front view of a first projecting screen shown in FIG. 1. Referring to FIGs. 1 and 2, the touch display apparatus 100 in this embodiment includes a first projecting screen 110 and a projection apparatus 120. The first projecting screen 110 has a first curved surface 112, and the first curved surface 112 is capable of receiving a touch input instruction (for example, a user contacts the first curved surface 112 by using a stylus or a finger, so as to generate a signal), and has at least one tactile sense identify region 112a. A sense of touch of the tactile sense identify region 112a is different from a sense of touch of the other regions of the first curved surface 112. The projection apparatus 120 is capable of projecting a projecting beam L toward the first curved surface 112, so as to form an image 50 on the first curved surface 112, whereby the user could watch the image 50 or execute the touch input instruction on the first curved surface 112.

With the configurations above, the image 50 is generated by performing projection to the first projecting screen 110 by the projection apparatus 120, so the touch function of the first projecting screen 110 may be achieved by an IR touch technology or other suitable technologies, without limiting the shape of the projecting screen, so that a displaying surface of the first projecting screen 110 may be designed to be a curved surface, so as to meet the requirements of various appearance design, for example, a central console for a vehicle. In addition, the tactile sense identify region 112a on the first projecting screen 110 has a sense of touch different from that of other regions, and thus the user could identify the position of the tactile sense identify region 112a by using the tactile sense, thereby improving the operation convenience of the touch display apparatus 100.

In this embodiment, a material of the first projecting screen 110 is, for example, a scattering material, so that the projecting beam L projected by the projection apparatus 120 could form the image 50 on the first curved surface 112.

In this embodiment, the tactile sense identify region 112a is, for example, a bump, and thus has the sense of touch different from the sense of touch of the other regions of the first projecting screen 110. The tactile sense identify region 112a is, for example, integrally formed on the first projecting screen 110, and a material of the tactile sense identify region 112a is the same as or different from that of other regions of the first projecting screen 110; and those with which the user could generate different tactile effects are within the scope of the invention. In addition, the material of the tactile sense identify region 112a may also be an elastic material, so as to improve the hand feeling of the user in operation.

In this embodiment, the tactile sense identify region 112a is located at a geometrical center of the first projecting screen 110, and the image 50 includes multiple click selection blocks 52 surrounding the tactile sense identify region 112a. After the user finds the position of the tactile sense identify region 112a by using the tactile sense of the finger, the user could easily click and select the click selection blocks 52 at the periphery of the tactile sense identify region 112a with a finger, so as to achieve touch input without watching the first projecting screen 110. For example, the touch display apparatus 100 in this embodiment is, for example, a central console installed in a vehicle, the user could implement the touch input on the touch display apparatus 100 in the manner above when driving a vehicle, with no need to be distracted to watch the first projecting screen 110, thereby improving the driving safety.

In this embodiment, the first projecting screen 110 receives the touch input instruction by using the IR touch technology. However, the invention is not limited thereto, and in other embodiments, the first projecting screen 110 could receive the touch input instruction by using other suitable technologies.

FIG. 3 is a cross-sectional view of a first projecting screen according to another embodiment of the invention. Referring to FIG. 3, in the first projecting screen 210 in this embodiment, a tactile sense identify region 212a on a first curved surface 212 is, for example, a recessed region, and thus has a sense of touch different from that of the other regions of the first curved surface 212. FIG. 4 is a cross-sectional view of a first projecting screen according to another embodiment of the invention. Referring to FIG. 4, in a first projecting screen 310 in this embodiment, a tactile sense identify region 312a on a first curved surface 312 is, for example, a rough surface region, and thus has a sense of touch different from that of the other regions of the first curved surface 312. A material of the tactile sense identify region 312a may be different from that of the other regions of the first projecting screen 310.

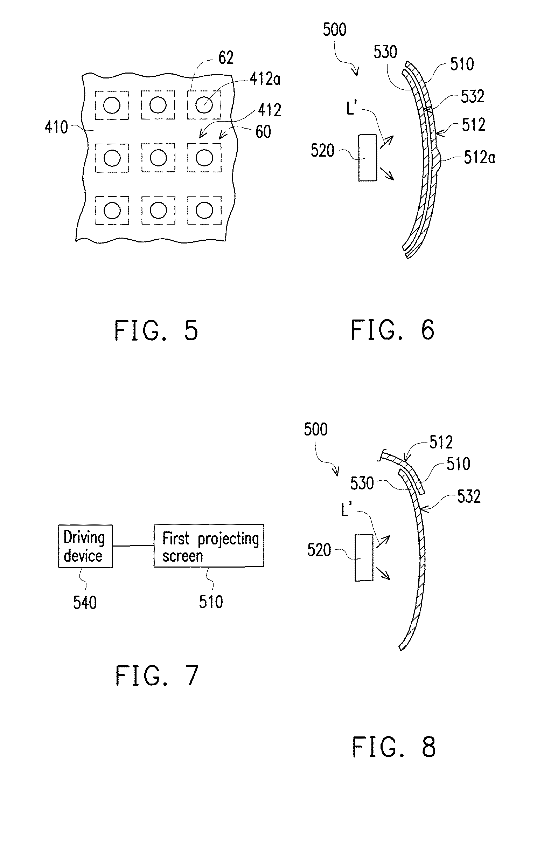

FIG. 5 is a front view of a first projecting screen according to another embodiment of the invention. In the first projecting screen 410 in this embodiment, the quantity of the tactile sense identify regions 412a on the first curved surface 412 is multiple. The image 60 includes multiple click selection blocks 62, and the tactile sense identify regions 412a are respectively aligned with the click selection blocks 62. After determining relative positions of the tactile sense identify regions 412a by using the tactile sense of a finger, a user could easily click and select the click selection block 62 on which touch input is to be performed, so as to perform the touch input without watching the first projecting screen 410.

FIG. 6 is a schematic view of a touch display apparatus according to another embodiment of the invention. FIG. 7 is a schematic block diagram of a driving device electrically connected to a first projecting screen shown in FIG. 6. FIG. 8 is a schematic view of the first projecting screen shown in FIG. 6 that is driven and does not cover a second projecting screen. Referring to FIGs. 6 to 8, in addition to a first projecting screen 510 and a projection apparatus 520, the touch display apparatus 500 in this embodiment further includes a second projecting screen 530 and a driving device 540. The second projecting screen 530 has a second curved surface 532, and the first projecting screen 510 is capable of covering the second curved surface 532 of the second projecting screen 530 as shown in FIG. 6. A projecting beam L' provided by the projection apparatus 520 could form an image on the second curved surface 532. The driving device 540 is electrically connected to the first projecting screen 510 and capable of driving the first projecting screen 510 to move relative to the second projecting screen 530, so that the first projecting screen 510 moves in any direction, and does not cover the second projecting screen 530, so as to expose the second curved surface 532 of the second projecting screen 530 as shown by the state in FIG. 8.

In this embodiment, a material of the second projecting screen 530 is, for example, a scattering material, so that the projecting beam L' projected by the projection apparatus 520 could form an image on the second curved surface 532. A material of the first projecting screen 510 is, for example, a transparent material, so when the first projecting screen 510 covers the second projecting screen 530, a user could watch the image projected onto the second curved surface 532 by the projection apparatus 520 through the first projecting screen 510. In this embodiment, the touch function of the first projecting screen 510 and the second projecting screen 530 could be achieved by, for example, an IR touch technology or other suitable technologies.

With the above configurations, when the touch display apparatus 500 is in a state as shown in FIG. 6, the user could identify the position of a tactile sense identify region 512a, thereby improving the operation convenience of the touch display apparatus 500. When the user intends to perform a complicated touch operation (for example, multi-touch or accessing network or playing games by using the touch display apparatus 500) without being disturbed by the tactile sense identify region 512a, the first projecting screen 510 may be driven by the driving device 540 to expose the second projecting screen 530 as shown in FIG. 8, thereby performing touch operation on the second curved surface 532.

To sum up, in the above embodiments of the invention, the image is generated by performing projection to the projecting screen by the projection apparatus, and thus the touch function of the projecting screen could be achieved by the IR touch technology or other suitable technologies, for example, a touch technology having a charge-coupled device (CCD) for image capture, without limiting the shape of the projecting screen, so that a displaying surface of the projecting screen may be designed to be a curved surface, so as to meet the requirements of various appearance design. In addition, the tactile sense identify region on the projecting screen has the sense of touch different from that of the other regions, so that the user could identify the position of the tactile sense identify region with the aid of tactile sense, thereby improving the operation convenience of the touch display apparatus.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A touch display apparatus, comprising:
- a first projecting screen, comprising a first curved surface, wherein the first curved surface is capable of receiving a touch input instruction and comprises at least one tactile sense identify region, and a sense of touch of the tactile sense identify region is different from a sense of touch of the other regions of the first curved surface; and
- a projection apparatus, capable of projecting a projecting beam toward the first curved surface, so as to form an image.

2. The touch display apparatus according to claim 1, wherein the tactile sense identify region comprises a bump, a recess, or a rough surface.

3. The touch display apparatus according to claim 1, wherein a material of the tactile sense identify region is an elastic material.

4. The touch display apparatus according to claim 1, wherein a material of the tactile sense identify region of the first projecting screen is the same as a material of the other regions of the first curved surface of the first projecting screen.

5. The touch display apparatus according to claim 1, wherein the tactile sense identify region is located at a geometrical center of the first projecting screen, and the image comprises multiple click selection blocks surrounding the tactile sense identify region.

6. The touch display apparatus according to claim 1, wherein the quantity of the tactile sense identify regions is multiple, the image comprises multiple click selection blocks, and the tactile sense identify regions are respectively aligned with the click selection blocks.

7. The touch display apparatus according to claim 1, wherein the first projecting screen receives the touch input instruction by using an infrared touch technology.

8. The touch display apparatus according to claim 1, wherein a material of the first projecting screen is a scattering material, and the projecting beam forms the image on the first curved surface.

9. The touch display apparatus according to claim 1" further comprising:
- a second projecting screen, comprising a second curved surface, wherein the first projecting screen covers the second projecting screen; and
- a driving device, electrically connected to the first projecting screen and capable of driving the first projecting screen to move relative to the second projecting screen, so as to expose the second curved surface.

10. The touch display apparatus according to claim 9, further comprising a projection apparatus, capable of projecting a projecting beam toward the second curved surface to form an image, when the first projecting screen moves and does not cover the second pro-jecting screen.

11. The touch display apparatus according to claim 10, wherein a material of the first projecting screen is a transparent material, and a material of the second projecting screen is a scattering material, so that the projecting beam projected on the second curved surface forms the image.
